# EUROPÄISCHE PATENTSCHRIFT

(11) **EP 0 935 710 B1**
(45) Veröffentlichungstag und Bekanntmachung des Hinweises auf die Patenterteilung: **02.07.2003**
(21) Anmeldenummer: 98943655.5
(22) Anmeldetag: 08.07.1998
(51) Int. Cl.: F04B 53/14, F04B 1/04, B60T 8/40

(54) **VERBUNDKOLBEN MIT INTEGRIERTEM DICHTELEMENT FÜR EINE RADIALKOLBENPUMPE IN EINER FAHRZEUGBREMSANLAGE**
COMPOSITE PISTON WITH INTEGRATED SEALING ELEMENT FOR A RADIAL PISTON PUMP IN AN AUTOMOBILE BRAKE SYSTEM
PISTON COMPOSITE AVEC ELEMENT D'ETANCHEITE INTEGRE POUR POMPE A PISTONS RADIAUX INSTALLEE DANS UN SYSTEME DE FREINAGE DE VEHICULE

(30) Priorität: 30.07.1997 DE 19732811
(43) Veröffentlichungstag der Anmeldung: 18.08.1999
(73) Patentinhaber: ROBERT BOSCH GMBH, 70442 Stuttgart (DE)
(72) Erfinder: SIEGEL, Heinz, D-70435 Stuttgart (DE); MERKLEIN, Dieter, D-87435 Kempten (DE); EHRLICH, Joachim, D-87437 Kempten (DE); WEH, Andreas, D-87471 Durach (DE); HELLEBRANDT, Michael, D-87545 Burgberg (DE); FLUCK, Tobias, D-87501 Immenstadt (DE); SCHLITZKUS, Michael, D-87463 Dietmannsried (DE)
(86) Internationale Anmeldenummer: DE9801889
(87) Internationale Veröffentlichungsnummer: WO99006703

(56) Entgegenhaltungen:
- DE-A- 4 242 420
- DE-A- 4 316 986
- DE-A- 19 618 013
- DE-A- 19 712 147
- PATENT ABSTRACTS OF JAPAN vol. 097, no. 010, 31. Oktober 1997 & JP 09 144665 A (NISSIN KOGYO KK), 3. Juni 1997

## Beschreibung

### Stand der Technik

Die Erfindung geht aus von einer Kolbenpumpe nach der Gattung des Hauptanspruchs, die insbesondere für eine hydraulische Fahrzeugbremsanlage mit einer Schlupfregeleinrichtung vorgesehen ist.

Eine derartige Kolbenpumpe ist beispielsweise bekannt aus der DE 41 07 979 A1. Die bekannte Kolbenpumpe weist ein Pumpengehäuse mit einer Zylinderbohrung auf, in der ein Kolben axial verschiebblich aufgenommen ist. Mittels eines Exzenter-Antriebs ist der Kolben zu einer in axialer Richtung hin- und hergehenden Hubbewegung antreibbar. Der Kolben der bekannten Kolbenpumpe ist ein durch aufwendiges, mehrfach abgestuftes Spanen und Bohren hergestelltes Werkstück.

### Vorteile der Erfindung

Der Kolben der erfindungsgemäßen Kolbenpumpen mit den Merkmalen des Anspruchs 1 weist einen Kern beispielsweise aus Stahl auf, der an seinem Umfang mit einem Gleitmantel aus Kunststoff versehen ist. Als Kern kann beispielsweise eine Nadel eines Nadellagers Verwendung finden. Der Gleitmantel braucht nicht die gesamte axiale Länge des Kerns abzudecken, es genügt beispielsweise auch ein Gleitmantel im Bereich eines Endes des Kerns. Auch können zwei Gleitmäntel im Bereich beider Enden des Kerns vorgesehen sein. Die Erfindung hat den Vorteil, daß sich der Kolben spanlos und damit schnell und preiswert herstellen läßt. Durch den Gleitmantel aus Kunststoff hat der Kolben gute Gleiteigenschaften in der Zylinderbohrung. Eine Nachbearbeitung des eine Gleitfläche bildenden Umfangs des Kolbens beispielsweise durch Schleifen erübrigt sich. Auch läßt sich der Kern durch Umformen, insbesondere Kaltumformen z. B. durch Fließpressen, Fließdrücken oder Kaltschlagen herstellen.

Wegen dem nichtmetallischen Gleitmantel kann zur Führung des Kolbens auf einen sonst üblichen Führungsring verzichtet werden, ohne daß befürchtet werden muß, daß erhöhte Reibung bzw. Beschädigungen der Führungsfläche auftreten. Durch den Entfall eines Führungsrings wird der Aufwand für den Zusammenbau der Kolbenpumpe vorteilhafterweise wesentlich verringert und gleichzeitig ist trotzdem eine sehr gute Dauerhaltbarkeit und ein hoher Wirkungsgrad der Kolbenpumpe gewährleistet.

Es kann vorgesehen sein, daß der Kern an einem Exzenter anliegt. Der aus hartem Material, vorzugsweise aus gehärtetem Stahl, bestehende Kern hat den Vorteil, daß damit die vom Exzenter kommende Antriebsenergie ohne Funktionsprobleme und ohne Verschleißprobleme auf den Kolben übertragen werden kann.

Der Kern hat auch den Vorteil, daß unerwünscht große Materialanhäufungen beim Gleitmantel vermieden werden können.

Der Kolben kann so gestaltet sein, daß der Kolben nicht am Kern geführt wird, was den Vorteil hat, daß ein arbeitsaufwendiges Schleifen des Kerns entfallen kann. Der Kolben kann aber auch so gestaltet werden, daß die Führung des Kolbens nur in dem Bereich des Kolbens, in dem das Herstellen der erforderlichen Oberflächengüte leicht erreichbar ist, direkt am Kern erfolgt.

Wird der Kolben mindestens stellenweise direkt am Kern des Kolbens geführt, so kann dort am Kern die erforderliche Oberflächengüte hergestellt werden, bevor der Gleitmantel am Kern des Kolbens angebracht wird. Dies hat den Vorteil, daß die erforderliche Obeflächengüte am Kern ohne großen Aufwand hergestellt werden kann

Es kann vorgesehen sein, daß der Gleitmantel auch zur Abdichtung zwischen dem Kolben und der Kolbenführung dient. Dies hat den Vorteil, daß auf einen Dichtring verzichtet werden kann.

Mit dem Gleitmantel kann vorteilhafterweise ohne zusätzlichen Aufwand ein Stufenkolben hergestellt werden, bei dem ein Ende des Kolbens einen größeren Durchmesser hat als das jeweils andere Ende des Kolbens.

Die Unteransprüche haben vorteilhafte Ausgestaltungen und Weiterbildungen der im Hauptanspruch angegebenen Erfindung zum Gegenstand.

in einer bevorzugten Ausgestaltung gemäß Anspruch 6 ist der Gleitmantel zugleich auch als Dichtelement ausgebildet. Dadurch entfällt ein separates Dichtelement, beispielsweise ein Dichtring und es erübrigt sich, eine Nut im Kolben oder in einer Zylinderbohrungswand zur Aufnahme des Dichtelements anzubringen. Des weiteren entfällt beim Zusammenbau der Kolbenpumpe der Arbeitsgang des Einsetzens des Dichtelements in die Nut.

Bei einer Weiterbildung der Erfindung gemäß der Anspruch 9 setzt sich der Gleitmantel aus Kunststoff über ein Stirnende des Kerns fort und weist dort eine Ventilkammer auf, in die ein Rückschlagventil als Ein- oder als Auslaßventil der erfindungsgemäßen Kolbenpumpe eingesetzt ist.

Die gemäß Anspruch 10 vorgeschlagene Haltefläche hat den Vorteil, daß eine auf Dauer haltbare Verbindung zwischen dem Kern und dem Gleitmantel gewährleistet ist.

Die Haltefläche kann auf sehr einfache Weise so gestaltet sein, daß der Gleitmantel und der Kern zusammengesteckt werden können, wobei die Haltefläche auf vorteilhafte Weise eine dauerhaltbare Verbindung zwischen dem Kern und dem Gleitmantel gewährleistet.

Die Kolbenpumpe ist als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. in der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand bevorzugt ausgewählter, in der Zeichnung dargestellter Ausführungsbeispiele näher erläutert. Es zeigen
- Figur 1: einen Achsschnitt einer erfindungsgemäßen Kolbenpumpe,
- Figur 2: einen Achsschnitt eines zweiten Ausführungsbeispiels der erfindungsgemäßen Kolbenpumpe,
- Figur 3: einen Achsschnit einer abgewandelten Ausführungsform der Kolbenpumpe aus Figur 2, und
- Figur 4: eine Einzelheitdarstellung gemäß Pfeil IV in Figur 2 in einer abgewandelten Ausführungsform.

### Beschreibung des ersten Ausführungsbeispiels

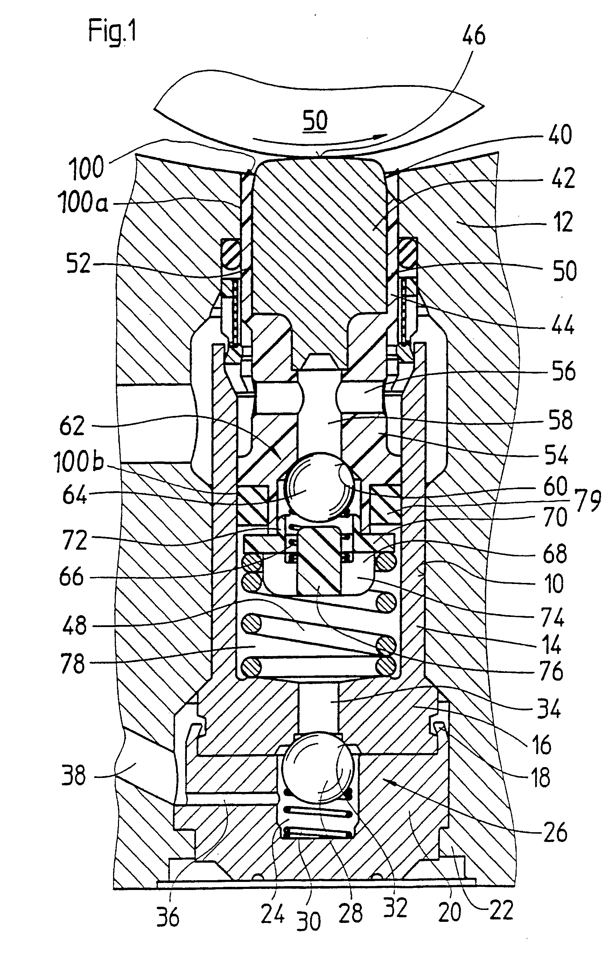

Die in Figur 1 dargestellte, erfindungsgemäße Kolbenpumpe ist in eine Zylinderbohrung 10 in einem Pumpengehäuse 12 eingesetzt, welches von einem Hydraulikblock einer im übrigen nicht dargestellten Fahrzeugbremsanlage gebildet ist. In den Hydraulikblock, von dem in der Zeichnung der besseren Überscihtlichkeit wegen lediglich ein die Kolbenpumpe umgebendes Bruchstück dargestellt ist, sind weitere hydraulische Bauteile wie Magnetventile und dgl. eingesetzt und hydraulisch miteinander und mit der Kolbenpumpe verschaltet.

Die Kolbenpumpe weist eine Laufbuchse 14 mit einem mit ihr einstückigen Laufbuchsenboden 16 auf, die in die Zylinderbohrung 10 eingepreßt ist. Mittels eines Bördels 18 ist ein zylindrischer Verschlußstopfen 20 am Laufbuchsenboden 16 angebracht, der durch eine Verstemmung 22 ein Ende der Zylinderbohrung 10 druckdicht verschließt. In eine Sackbohrung 24 des Verschlußstopfens 20 ist ein Rückschlagventil als Auslaßventil 26 eingesetzt, das als Ventilschließkörper eine Ventilkugel 28 aufweist, die von einer Schraubendruckfeder als Ventilschließfeder 30 gegen einen konischen Ventilsitz 32 gedrückt wird, welcher an einer Mündung eines axialen Durchgangslochs 34 im Laufbuchsenboden 16 ausgebildet ist. Ein Auslaß erfolgt durch eine radiale Auslaßbohrung 36 im Verschlußstopfen 20, die mit einer Auslaßbohrung 38 im Pumpengehäuse 12 kommuniziert.

Ein Kolben 40 der erfindungsgemäßen Kolbenpumpe ist als Verbundteil mit einem Kern 42 ausgebildet, der mit einem Gleitmantel 44 aus Kunststoff an seinem Umfang umspritzt ist. Mit seinem Gleitmantel 44 ist der Kolben 40 gleitend in axialer Richtung verschiebbar in der Zylinderbohrung 10 bzw. in der Laufbuchse 14 geführt. Der Kern 42 besteht im dargestellten Ausführungsbeispiel aus Stahl.

Auch andere Werkstoffe, beispielsweise andere Metalle oder auch Keramik kommen als Werkstoff für den Kern 42 in Betracht.

Eine dem Laufbuchsenboden 16 abgewandte Stirnfläche des Kerns 42, die aus der Laufbuchse 14 vorsteht, liegt frei, d. h. sie wird nicht vom Gleitmantel 44 überdeckt. Diese Stirnfläche des Kerns 42 bildet eine Gleitfläche 46, mit der der Kolben 40 von einer Kolbenrückstellfeder 48 gegen einen Umfang eines elektromotorisch rotierend antreibbaren Exzenters 50 gedrückt wird, mit dem der Kolben 40 zu einer in axialer Richtung hin- und hergehenden Hubbewegung antreibbar ist. Die Gleitfläche 46 ist durch Verwendung eines verschleißarmen Werkstoffs für den Kern 42 oder durch Härten des Kerns 42 verschleißarm ausgebildet.

Der Kern 42 ist ein formmäßig sehr einfach herstellbares, im wesentlichen zylindrisches Teil. Der Gleitmantel 44 umgibt den Umfang des Kerns 42 mit einem hohlzylindrischen Abschnitt 52, er setzt sich auf einer dem Exzenter 50 abgewandten Stirnseite des Kerns 42 den Kern 42 bzw. den Kolben 40 verlängernd in die Laufbuchse 14 hinein fort. Der den Kolben 40 verlängernde Abschnitt 54 des Gleitmantels 44 weist ein Querloch 56 auf, welches ein axiales Sackloch 58 durchsetzt, welches ebenfalls in dem den Kolben 40 verlängernden Abschnitt 54 des Gleitmantels 44 angebracht ist. Das Sackloch 58 erweitert sich unter Bildung eines konischen Ventilsitzes 60 und mündet an einer dem Laufbuchsenboden 16 zugewandten Stirnseite des Kolbens 40. in den erweiternden Teil des Sacklochs 58 ist ein Rückschlagventil als Einlaßventil 62 eingesetzt, das eine Ventilkugel 64 als Ventilschließkörper aufweist, die von einer Schraubdruckfeder als Ventilschließfeder 66 gegen den Ventilsitz 60 gedrückt wird.

Die Ventilschließfeder 66 stützt sich an einem Ventilkäfig 68 ab, der an der dem Laufbuchsenboden 16 zugewandten Stirnseite des Kolbens 40 angebracht ist. Der Ventilkäfig 68 hat die Form einer Ventilkappe 68 und ist ein Spritzgießteil aus Kunststoff. Der Ventilkäfig 68 weist eine Ringscheibe 70 auf, von der ein Zentrierkragen 72 axial absteht, der nach Art einer Passung in das Sackloch 58 im Kolben 40 eingreift. Die Kolbenrückstellfeder 48 stützt sich an einer Innenseite des Laufbuchsenbodens 16 ab und drückt den Ventilkäfig 68 an seiner Ringscheibe 70 gegen das Stirnende des Kolbens 40. Über die Ringscheibe 70 drückt die Kolbenrückstellfeder 48 den Kolben 40 gegen den Umfang des Exzenters 50.

Auf der dem Zentrierkragen 72 abgewandten Seite des Ventilkäfigs 68 stehen von der Ringscheibe 70 vier Stege 74 ab, die sich in der Mitte vereinigen und einen mit ihnen einstückigen, in Richtung der Ventilkugel 64 abstehenden, bolzenförmigen Ventilhubbegrenzer 76 tragen. Der Ventilhubbegrenzer 76 begrenzt den Öffnungsweg, um den sich die Ventilkugel 64 vom Ventilsitz 60 abheben läßt. Der Ventilhubbegrenzer 76 vermindert eine Abnutzung des Ventilsitzes 60 durch starkes Schlagen der Ventilkugel 64 beim Schließen des Rückschlagventils und begrenzt die Ventilschließzeit. Des weiteren verkleinert der Ventilhubbegrenzer 76 ein Totvolumen der erfindungsgemäßen Kolbenpumpe, also ein verbleibendes Restvolumen in einem Verdrängungsraum 78 der Kolbenpumpe, wenn der Kolben 40 bis in seine Endstellung in die Laufbuchse 14 hineinverschoben ist. Diese Verkleinerung des Totvolumens verbessert einen Wirkungsgrad der Kolbenpumpe.

Der Gleitmantel 44 besteht aus einem kohlefaserverstärkten Kunststoff, dem Teflonanteile zur Verbesserung der Gleiteigenschaften beigemischt sind. Die Ventilkappe 68 besteht ebenfalls aus kohlefaserverstärktem Kunststoff, jedoch vorzugsweise ohne Teflonanteil.

Am Außenumfang des Gleitmantels 44, an dem dem Ventilkäfig 68 zugewandten Ende, ist eine Abstufung angeformt. Nach dem Anbauen des Ventilkäfigs 68 an den Kolben 40 wird zwischen dieser Abstufung des Gleitmantels 44 und der Ventilscheibe 70 des Ventilkäfigs 68 eine Ringnut gebildet, in die ein Dichtring 79 eingelegt werden kann. Dadurch, daß der Dichtring 79 in die Ringnut eingelegt werden kann, bevor der Kolben 40 und der Ventilkäfig 68 zusammengefügt werden, d. h. bevor die Ringnut stirnseitig geschlossen wird, ist der Zusammenbau dieser Teile sehr einfach, insbesondere muß der Dichtring 79 während des Zusammenbaus nicht bzw. nur sehr unwesentlich gedehnt werden.

Weil der Gleitmantel 44 aus einem weichen Material, vorzugsweise aus Kunststoff, besteht, kann der Führungsspalt zwischen dem innenmantel der Laufbuchse 14 und dem Gleitmantel 44 sehr eng ausgeführt werden. Der Gleitmantel 44 kann sogar mit etwas Vorspannung in dem Innenmantel eingebaut sein. Der Führungsspalt der hier vorgeschlagenen Kolbenpumpe kann wesentlich enger ausgeführt werden, als wenn kein Gleitmantel vorgesehen wäre. Wegen dem engen Führungsspalt zwischen dem Gleitmantel 44 und dem Innenmantel der Führungsbuchse 14 besteht keine Gefahr, daß infolge hohen Drucks in dem Verdrängungsraum 78 der Dichtring 79 in den Führungsspalt zwischen dem Gleitmantel 44 und der Laufbuchse 14 hineingequetscht wird.

### Beschreibung des zweiten Ausführungsbeispiels

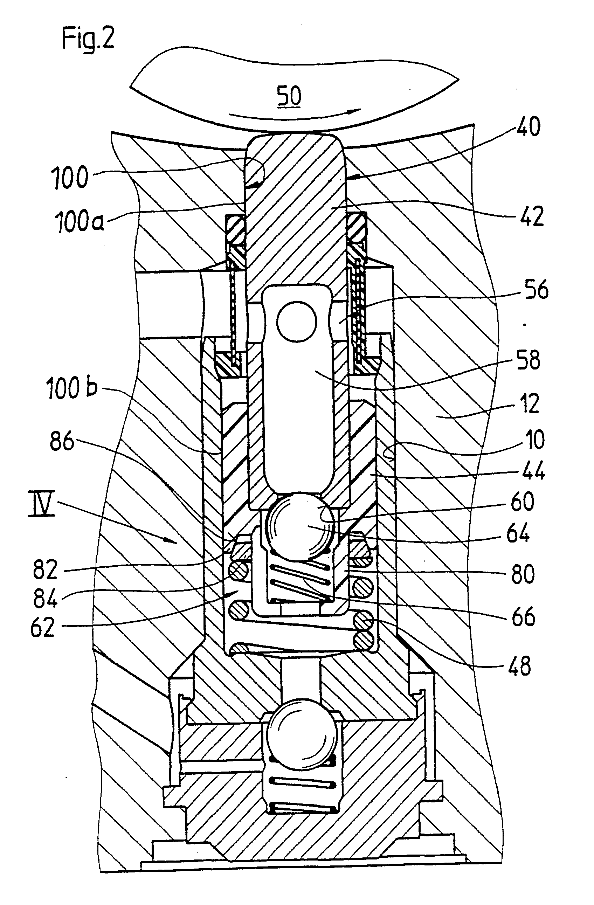

Zur Vermeidung von Wiederholungen werden nachfolgend lediglich die Unterschiede der in Figur 2 dargestellten Ausführungsform einer erfindungsgemäßen Kolbenpumpe hinsichtlich der in Figur 1 dargestellten Kolbenpumpe erläutert, im übrigen wird auf die Ausführungen zu Figur 1 verwiesen. Für gleiche Bauteile werden gleiche Bezugszeichen verwendet.

Die in Figur 2 dargestellte Kolbenpumpe weist einen Kolben 40 auf, dessen Kern 42 stabförmig ausgebildet ist, wobei das Querloch 56 und das axiale Sackloch 58 im Kern 42 angebracht sind. Der Gleitmantel 44 erstreckt sich lediglich über etwa ein Drittel der Länge des Kerns 42 auf einer in der Laufbuchse 14 aufgenommen Seite des Kerns 42. Auf seiner übrigen Länge ist der Kern 42 nicht vom Gleitmantel 44 umgeben. Der Umfang des Kerns 42 liegt auf dieser Länge frei. An seinem dem Exzenter 50 zugewandten Ende ist der Kern 42 unmittelbar in der Zylinderbohrung 10 des Pumpengehäuses 12 geführt.

im Unterschied zum ersten Ausführungsbeispiel ist bei dem in der Figur 2 dargestellten Ausführungsbeipiel der Gleitmantel 44 einstückig mit einem Ventilkäfig 68 verbunden, der den Kern 42 bzw. den Kolben 40 axial verlängernd an einer dem Laufbuchsenboden 16 zugewandten Stirnseite des Kerns 42 bzw. des Kolbens 40 geformtist.

Auch dann, wenn gemäß Figur 2 der Ventilkäfig 68 einstückig mit dem Gleitmantel 44 verbunden ist, kann am Ventilkäfig 68 der in der Figur 1 gezeigte Ventilhubbegrenzer 76 vorgesehen sein.

In den Ventilkäfig 68 ist das Einlaßventil 62 eingesetzt, dessen Ventilschließfeder 66 sich im Ventilkäfig 80 abstützt und die Ventilkugel 64 gegen den Ventilsitz 60 drückt, der bei der in Figur 2 dargestellten Ausführungsform einer erfindungsgemäßen Kolbenpumpe an einer Mündung des im Kern 42 vorgesehen Sacklochs 58 ausgebildet ist.

Der Gleitmantel 44 der in Figur 2 dargestellten Kolbenpumpe ist zugleich auch als Dichtelement ausgebildet: Er weist dazu eine mit ihm einstückige, umlaufende Dichtlippe 82 auf, die, wie von Manschettendichtringen an sich bekannt, in axialer Richtung am Außenumfang des Gleitmantels 44 vom Gleitmantel 44 absteht und zugleich radial nach außen elastisch federnd vorgespant ist. Die Dichtlippe 82 wird von einem Spreizring 84 radial nach außen in abdichtende Anlage an eine Innenumfangsfläche der Laufbuchse 14 gedrückt. Der Spreizring 84 weist eine konische Spreizfläche 86 auf, mit der er an einer zur Spreizfläche 86 korrespnondierenden, ebenfalls konischen Innenseite der Dichtlippe 82 anliegt. Der Spreizring 84 wird von der Kolbenrückstellfeder 48 in axialer Richtung gegen die Dichtlippe 82 gedrückt. Ein Konuswinkel der Spreizfläche 86 bestimmt, mit welcher Spreizkraft die Dichtlippe 82 radial nach außen gegen die Innenumfangsfläche der Laufbuchse 14 gedrückt wird im Verhältnis zur Axialkraft, mit der die Kolbenrückstellfeder 48 den Kolben 40 gegen den Umfang des Exzenters 50 drückt.

Der Spreizring 84 sorgt für die elastisch federnde Vorspannung der Dichtlippe 82 gegen die Innenumfangsfläche der Laufbuchse 14. Der Spreizring 84 hat den Vorteil, daß für den Gleitmantel 44 auch ein Werkstoff verwendet werden kann, der weniger geeignet ist, um im Dauerbetrieb eine elastische Vorspannung aufrechtzuerhalten, dafür aber z. B. besonders gute Gleiteigenschaften hat. Dadurch kann für den Gleitmantel 44 ein bezüglich Gleiteigenschaften und Formstabilität optimaler Werkstoff ausgewählt werden, und trotzdem kann der Gleitmantel 44 auch eine Abdichtfunktion erfüllen. Der Spreizring 84 kann ohne nennenswerten Arbeitsaufwand beim Zusammenbau der Kolbenpumpe zwischen der Kolbenrückstellfeder 48 und dem Kolben 40 zwischengelegt werden.

Der Gleitmantel 44 ist auf den Kern 42 aufgeschoben oder aufgepreßt. Der Kolben 20 ist aber auch in der Weise herstellbar, daß man den Kern 42 in eine Form einer Spritzgießmaschine für Kunststoff einlegt und dann den Kern 42 mit Kunststoff umspritzt, um so auf sehr einfache Weise dem Kolben 20 die vorgesehene fertige Form zu geben.

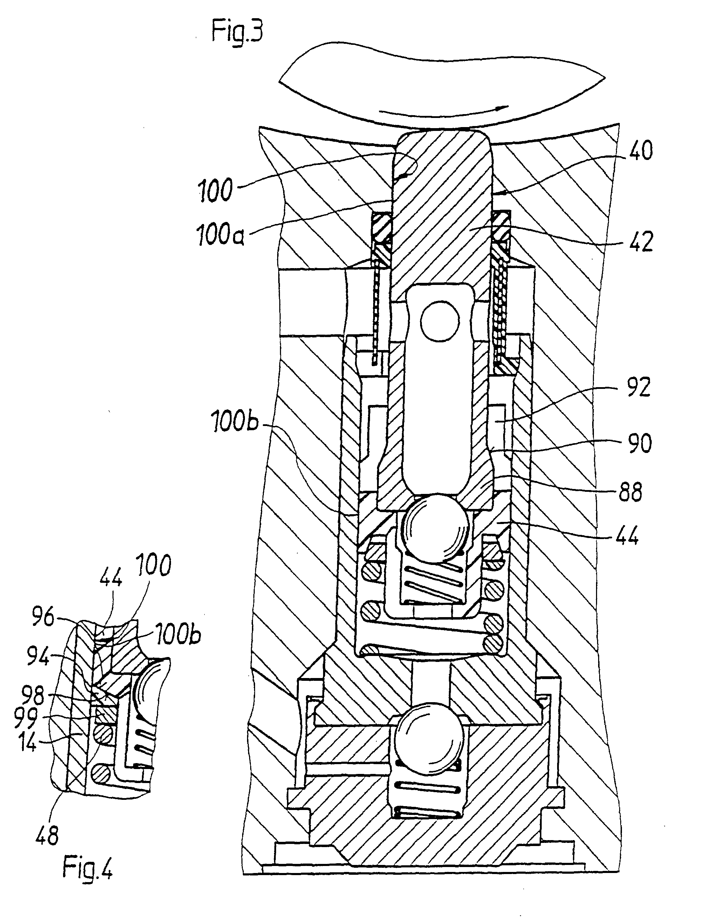

Bei der in Figur 3 dargestellten erfindungsgemäßen Kolbenpumpe weist der Kern 42 des Kolbens 40 eine Verdickung 88 an seiner dem Laufbuchsenboden 16 zugewandten Stirnseite auf. Die Verdickung kann beispielsweise durch Stauchen hergestellt sein. Die Verdickung 88 hat eine in Richtung des Exzenters 50 weisende konisch verlaufende Fläche. Diese Fläche bildet eine Hinterschneidung. Die Hinterschneidung dient als Haltefläche 90, die von Federfingern 92 des Gleitmantels 44 hintergriffen wird. Die Federfinger 92 des Gleitmantels 44 werden dadurch gebildet, daß der Gleitmantel 44 im Bereich seines dem Exzenters 50 zugewandten Endes in Längsrichtung einmal oder mehrfach geschlitzt ist. Dadurch kann dieses Ende des Gleitmantels 44 leicht über die Verdickung 88 hinweg geschoben werden, bis die Federfinger 92 die Haltefläche 90 hintergreifen. Der Gleitmantel 44 ist bei dieser Ausgestaltung der Erfindung nach Art einer Schnappverbindung mit dem Kern 42 des Kolbens 40 verbunden.

Die Schnappverbindung zwischen dem Kern 42 und dem Gleitmantel 44 kann aber auch in der Weise ausgebildet sein, daß auf die Verdickung 88 verzichtet wird, so daß der Kern 42 am Außenumfang durchgehend eine zylindrische Fom hat, die z. B. an einer Stelle durch einen umlaufenden Ringeinstich (nicht dargestellt) unterbrochen ist, in den die Federfinger 92 eingreifen. In diesem Fall befindet sich die Haltefläche 90 an der Seitenwand des Ringeinstichs, so daß, nachdem der Gleitmantel 44 mit dem Kern 42 verbunden ist, die Federfinger 92 des Gleitmantels 44 die Haltefläche 90 hintergreifen.

Im übrigen ist die in Figur 3 dargestellte Kolbenpumpe übereinstimmend mit der in Figur 2 dargestellten Kolbenpumpe ausgebildet, es wird insoweit auf die Ausführungen zu Figur 2 verwiesen.

Die in Figur 4 dargestellte Ausführungsform der Erfindung weist einen vom Gleitmantel 44 separaten Dichtring 94 aus einem Elastomer oder aus Kunststoff anstelle der Dichtlippe 82 auf. Der Dichtring 94 weist eine Konusfläche 96 auf einer Stirnseite auf, die von der Kolbenrückstellfeder 48 gegen eine korrespondierende, konische Ringschulterfläche 98 des Gleitmantels 44 gedrückt wird. Dies bewirkt eine radiale Aufweitung des Dichtrings 94, der Dichtring 94 wird abdichtend gegen die Innenumfangswand der Laufbuchse 14 gedrückt.

Als mechanischen Schutz für den Dichtring ist zwischen dem Dichtring 94 und der Kolbenrückstellfeder 48 eine Scheibe 99 beigelegt (Fig. 4). Die Berührfläche zwischen dem Dichtring 94 und der Scheibe 99 verläuft beim bevorzugt ausgewählten Ausführungsbeispiel senkrecht zur Längsachse des Kolbens 40. Es ist aber auch möglich, diese Berührfläche in der Weise mit einem Winkel gegenüber der Längsachse des Kolbens 40 zu neigen, daß dadurch die Kolbenrückstellfeder 48 eine Kraftkomponente auf den Dichtring 94 radial nach außen gegen die Innenfläche der Laufbuchse 14 erzeugt.

Im übrigen ist auch diese Ausführungsform der Erfindung übereinstimmend mit der in Figur 2 dargestellten Kolbenpumpe ausgebildet und es wird zur Vermeidung von Wiederholungen auf die Ausführungen zu Figur 2 verwiesen.

Wie die ausgewählten, in den Figuren 1 bis 4 dargestellten Ausführungsbeispiele zeigen, wird der Kolben 40 an seinen beiden Enden innerhalb einer Kolbenführung 100 axial beweglich geführt. Zur Führung des Kolbens 40 in der Kolbenführung 100 gibt es einen ersten Führungsbereich 100a und einen zweiten Führungsbereich 100b. Der erste Führungsbereich 100a befindet sich im Bereich des dem Exzenter 50 zugewandten Endes des Kolbens 40, und der zweite Führungsbereich 100b befindet sich im Bereich des dem Verdrängungsraum 78 zugewandten Endes des Kolbens 40. Bei den für die Zeichnung bevorzugt ausgewählten Ausführungsbeispielen wird der Kolben 40 im Führungsbereich 100a direkt im Pumpengehäuse 12 geführt, und im Führungsbereich 100b erfolgt die Führung des Kolbens 40 an der Innenumfangsfläche der Laufbuchse 14. Es sei darauf hingewiesen, daß man die Laufbuchse 14 auch so weit in Richtung des Exzenters 50 verlängern kann, daß der Kolben 40 sowohl im Führungsbereich 100b als auch im Führungsbereich 100a innerhalb der Laufbuchse 14 geführt wird (nicht dargestellt). Es ist aber auch möglich, gegebenenfalls auf die Laufbuchse 14 zu verzichten, so daß der Kolben 40 sowohl im Führungsbereich 100a als auch im Führungsbereich 100b ohne Laufbuchse direkt im Pumpengehäuse 12 axial beweglich geführt wird (nicht dargestellt). Dadurch kann die Anzahl der benötigten Bauteile reduziert werden. Begünstigt wird dies durch den Gleitmantel 44, weil dieser auch bei Verzicht auf die Laufbuchse 14 für eine gute, reibungsarme und dauerhaltbare Fürung des Kolbens 40 direkt im Pumpengehäuse 12 sorgen kann.

Es sei besonders darauf hingewiesen, daß der Gleitmantel 44 so dimensioniert sein kann, daß die Führung des Kolbens 40 sowohl im Führungsbereich 100a als auch im Führungsbereich 100b über den Gleitmantel 44 erfolgt (Figur 1). Man kann aber auch den Gleitmantel 44 so ausführen, daß nur im Führugsbereich 100b die Führung des Kolbens 20 über den Gleitmantel 44 erfolgt. D. h. im Führungsbereich 100a wird der Kern 42 des Kolbens 40 ohne Gleitmantel direkt im Pumpengehäuse 12 geführt (Figuren 2 und 3), oder aber der Kern 42 wird im Führungsbereich 100a direkt in der Laufbuchse 14 geführt (nicht dargestellt).

Es sei noch darauf aufmerksam gemacht, daß der Kolben 40 im Führungsbereich 100a und im Führungsbereich 100b denselben Durchmesser haben kann (Figur 1). Es ist aber auch möglich, beispielsweise den Durchmesser des Kolbens 40 im Führungsbereich 100b größer zu wählen als im Führungsbereich 100a (Figuren 2 und 3). Dadurch hat die Kolbenpumpe ein besonders gutes Ansaugverhalten. Weil es leicht möglich ist, dem Gleitmantel 40 eine gewünschte Form und einen gewünschten Durchmesser zu geben, bedeutet es keinen Mehraufwand, den Durchmesser des Kolbens 40 im Führungsbereich 100a größer zu wählen als im Führungsbereich 100b.

Ohne Abänderung des Kerns 42 kann durch leichtes Abändern des Durchmessers des Gleitmantels 44 der Kolben 40 dem jeweiligen Bedarf leicht angepaßt werden. Insbesondere kann der Kolben 40 dadurch leicht als Stufenkolben oder als Kolben mit durchgehend gleichem Durchmesser ausgeführt werden.

Auch dann, wenn der Durchmesser des Kolbens 40 im Führungsbereich 100b größer ist als im Führungsbereich 100a, ist die Herstellung der geforderten Qberflächengüte des Kolbens 40 im Führungsbereich 100a sehr einfach möglich, weil es möglich ist, den Gleitmantel 44 erst dann am Kern 42 anzubringen, nachdem der Kolben 40 im Fürhungsbereich 100a die geforderte hochwertige Oberflächengüte erhalten hat. Es sei erwähnt, daß ansonsten bei einem abgestuften Kolben die Bearbeitung des Kolbens in einem Bereich mit reduziertem Durchmesser einen besonders hohen Arbeitsaufwand erforderlich machen würde.

## Patentansprüche

1. Kolbenpumpe einer Fahrzeugbremsanlage mit einem Pumpengehäuse, das eine Zylinderbohrung aufweist, in der ein zu einer hin- und hergehenden Hubbewegung antreibbarer Kolben axial verschiebblich geführt ist, **dadurch gekennzeichnet, daß** der Kolben (40) ein Verbundteil ist, das einen Kern (42) aufweist, der einen Gleitmantel (44) aus Kunststoff an seinem Umfang aufweist.

2. Kolbenpumpe nach Anspruch 1, **dadurch gekennzeichnet, daß** der Kern (42) mit dem Gleitmantel (44) umspritzt ist.

3. Kolbenpumpe nach Anspruch 1, **dadurch gekennzeichnet, daß** der Kern (42) aus Metall oder aus Keramik besteht.

4. Kolbenpumpe nach Anspruch 1, **dadurch gekennzeichnet, daß** eine einem den Kolben (40) antreibenden Exzenter (50) zugewandte Stirnseite des Kolbens (40) eine Gleitfläche (46) aus Metall oder aus Keramik aufweist.

5. Kolbenpumpe nach Anspruch 1, **dadurch gekennzeichnet, daß** die Kolbenpumpe ein in den Kolben (40) integriertes Rückschlagventil (62) aufweist, wobei ein Öffnungshub eines Ventilschließkörpers (64) des Rückschlagventils (62) von einem am Kolben (40) angebrachten Ventilhubbegrenzer (76) begrenzt wird.

6. Kolbenpumpe nach Anspruch 1, **dadurch gekennzeichnet, daß** der Gleitmantel (44) als Dichtelement ausgebildet ist.

7. Kolbenpumpe nach Anspruch 6, **dadurch gekennzeichnet, daß** der Gleitmantel (44) eine umlaufende Dichtlippe (82) aufweist.

8. Kolbenpumpe nach Anspruch 7, **dadurch gekennzeichnet, daß** der Kolben (40) einen Spreizring (84) mit einer umlaufenden Spreizfläche (86) aufweist, welche eine Neigung zu einer Radialebene aufweist, und daß die Kolbenpumpe ein Spreizfederelement (48) aufweist, das den Spreizring (84) in axialer Richtung mit seiner Spreizfläche (86) gegen die Dichtlippe (82) drückt, so daß der Spreizring (84) die Dichtlippe (82) radial nach außen gegen eine Umfangswand der Zylinderbohrung drückt.

9. Kolbenpumpe nach Anspruch 1, **dadurch gekennzeichnet, daß** die Kolbenpumpe ein Rückschlagventil (62) aufweist, das in den Gleitmantel (44) eingesetzt ist.

10. Kolbenpumpe nach Anspruch 1, **dadurch gekennzeichnet, daß** der Gleitmantel (44) eine am Kolben (40) vorgesehene Haltefläche (90) hintergreift.

## Claims

1. Piston pump of a vehicle brake system, with a pump casing having a cylinder bore, in which a piston capable of being driven in a to-and-fro stroke movement is guided so as to be axially displaceable, **characterized in that** the piston (40) is a composite part having a core (42) which has on its circumference a sliding jacket (44) made from plastic.

2. Piston pump according to Claim 1, **characterized in that** the sliding jacket (44) is injection-moulded around the core (42).

3. Piston pump according to Claim 1, **characterized in that** the core (42) consists of metal or of ceramic.

4. Piston pump according to Claim 1, **characterized in that** an end face of the piston (40) which faces an eccentric (50) driving the piston (40) has a sliding surface (46) made from metal or from ceramic.

5. Piston pump according to Claim 1, **characterized in that** the piston pump has a non-return valve (62) integrated into the piston (40), an opening stroke of a valve-closing body (64) of the non-return valve (62) being limited by a valve-stroke limiter (76) attached to the piston (40).

6. Piston pump according to Claim 1, **characterized in that** the sliding jacket (44) is designed as a sealing element.

7. Piston pump according to Claim 6, **characterized in that** the sliding jacket (44) has a peripheral sealing lip (82).

8. Piston pump according to Claim 7, **characterized in that** the piston (40) has an expanding ring (84) with a peripheral expanding surface (66) which is at an inclination to a radial plane, and **in that** the piston pump has an expanding-spring element (48) which presses the expanding ring (84) in the axial direction with its expanding surface (86) against the sealing lip (82), so that the expanding ring (84) presses the sealing lip (82) radially outwards against a circumferential wall of the cylinder bore.

9. Piston pump according to Claim 1, **characterized in that** the piston pump has a non-return valve (62) which is inserted into the sliding jacket (44).

10. Piston pump according to Claim 1, **characterized in that** the sliding jacket (44) engages behind a holding surface (90) provided on the piston (40).

## Revendications

1. Pompe à piston pour un système de freinage de véhicule comprenant un corps de pompe avec un perçage cylindrique recevant en coulissement axial un piston entraîné selon un mouvement de translation de va et vient,
**caractérisée en ce que**
le piston (40) est une pièce composite comprenant un noyau (42) dont la périphérie est munie d'une enveloppe de glissement (44) en matière plastique.

2. Pompe à piston selon la revendication 1,
**caractérisée en ce que**
le noyau (42) est entouré d'une enveloppe de glissement (44) injectée.

3. Pompe à piston selon la revendication 1,
**caractérisée en ce que**
le noyau (42) est en métal ou en céramique.

4. Pompe à piston selon la revendication 1,
**caractérisée en ce que**
la face frontale du piston (40) tournée vers l'excentrique (50) entraînant le piston (40) présente une surface de glissement (46) en métal ou en céramique.

5. Pompe à piston selon la revendication 1,
**caractérisée en ce qu'**
elle comporte un clapet anti-retour (62) intégré dans le piston (40) et la course d'ouverture de l'organe d'obturation de soupape (64) du clapet anti-retour (62) est limitée par un limiteur de course (76) équipant le piston (40).

6. Pompe à piston selon la revendication 1,
**caractérisée en ce que**
l'enveloppe de glissement (44) est en forme d'élément d'étanchéité.

7. Pompe à piston selon la revendication 6,
**caractérisée en ce que**
l'enveloppe de glissement (44) comporte une lèvre d'étanchéité (82) périphérique.

8. Pompe à piston selon la revendication 7,
**caractérisée en ce que**
le piston (40) comporte un anneau d'écartement (84) ayant une surface d'écartement (86) périphérique, présentant une inclinaison par rapport au plan radial et la pompe à piston comporte un élément de ressort d'écartement (48) qui pousse l'anneau d'écartement (84) dans la direction axiale avec sa surface d'écartement (86) contre la lèvre d'étanchéité (82) pour que l'anneau d'écartement (84) pousse la lèvre d'étanchéité (82) radialement vers l'extérieur contre la paroi périphérique du perçage cylindrique.

9. Pompe à piston selon la revendication 1,
**caractérisée en ce que**
la pompe à piston comporte un clapet anti-retour (62) placé dans l'enveloppe de glissement (44).

10. Pompe à piston selon la revendication 1,
**caractérisée en ce que**
l'enveloppe de glissement (44) vient prendre derrière une surface de fixation (90) prévue sur le piston (40).
